# EUROPÄISCHE PATENTSCHRIFT

(11) **EP 2 762 103 B1**
(45) Veröffentlichungstag und Bekanntmachung des Hinweises auf die Patenterteilung: **21.11.2018**
(21) Anmeldenummer: 14150566.9
(22) Anmeldetag: 09.01.2014
(51) Int. Cl.: A61C 5/62, A61C 5/66

(54) **System und Verfahren zum Ausbringen einer Dentalmasse**
System and method for distribution of a dental composition
Système et procédé de distribution d'une masse dentaire

(30) Priorität: 30.01.2013 DE 102013201460
(43) Veröffentlichungstag der Anmeldung: 06.08.2014
(73) Patentinhaber: Transcodent GmbH & Co. KG, 24149 Kiel (DE)
(72) Erfinder: Dr. Fritze, Joachim, 24211 Preetz (DE)
(74) Vertreter: Manitz Finsterwald Patentanwälte PartmbB

(56) Entgegenhaltungen:
- WO-A1-97/26041
- GB-A- 2 172 059
- US-A- 5 122 057
- US-A- 5 286 257

## Beschreibung

Die Erfindung betrifft ein System aus einer Composite-Kapsel zum Aufnehmen und Abgeben einer Dentalmasse, einer Vorratsspritze sowie einer Ausbringpistole nach dem Oberbegriff des Anspruchs 1. Die Composite-Kapsel umfasst einen von einer Kapselwand umgebenen Aufnahmeraum, der sich zwischen einer Aufnahmeöffnung und einer Austrittsöffnung erstreckt, wobei die Austrittsöffnung an einem vorderen Ende des Aufnahmeraums und die Aufnahmeöffnung an einem hinteren Ende des Aufnahmeraums angeordnet ist. Eine in Richtung des vorderen Endes ausgerichtete Stützfläche springt nach außen gegenüber der Kapselwand vor. Die Erfindung betrifft außerdem ein Verfahren zum Ausbringen einer Dentalmasse unter Verwendung eines solchen Systems.

Solche Composite-Kapseln dienen dazu, eine Dentalmasse, wie sie beispielsweise zur Füllung von Kavitäten in Zähnen verwendet wird, gezielt an einem gewünschten Ort im Mundraum eines Patienten auszubringen. Wenn Druck auf die Dentalmasse im Aufnahmeraum ausgeübt wird, tritt die Dentalmasse durch die Austrittsöffnung aus und kann vom Zahnarzt am gewünschten Ort angewendet werden.

Zum Ausbringen der Dentalmasse kann eine Composite-Kapsel in eine Ausbringpistole eingesetzt werden. Die Ausbringpistole umfasst einen Stößel, mit dem die Dentalmasse in der Composite-Kapsel unter Druck gesetzt werden kann, so dass sie über die Austrittsöffnung austritt. Mit der Stützfläche stützt sich die Composite-Kapsel an einer Gegenfläche der Ausbringpistole ab, wodurch die Composite-Kapsel entgegen der Kraft des Stößels in ihrer Position in der Ausbringpistole gehalten wird. Ein solches System aus Composite-Kapsel, Ausbringpistole und Vorratsspritze ist aus der US 5,122,057 bekannt. In der WO 97/26041 ist ein Spritzenaufsatz zur Ausbringung einer Dentalmasse offenbart.

Bei den Composite-Kapseln handelt es sich um vorgefüllte Einheiten, in denen eine fest vorgegebene Menge an Dentalmasse enthalten ist. Nur in den wenigsten Fällen entspricht diese vorgegebene Menge an Dentalmasse genau der Menge, die der Zahnarzt benötigt. In den meisten Fällen-bleibt überschüssige Dentalmasse in der Composite-Kapsel zurück, die als Abfall entsorgt werden muss.

Der Erfindung liegt die Aufgabe zu Grunde, eine Composite-Kapsel vorzustellen, die variabler eingesetzt werden kann. Ausgehend vom genannten Stand der Technik wird die Aufgabe gelöst mit den Merkmalen des unabhängigen Anspruchs 1. Vorteilhafte Ausführungsformen finden sich in den Unteransprüchen.

Bei der erfindungsgemäßen Composite-Kapsel ist die Stützfläche durch eine Gewindeausnehmung unterbrochen. Gewindeausnehmung bezeichnet einen in einer Ebene der Stützfläche liegenden Bereich, in dem ein Abschnitt eines Gegengewindes angeordnet ist, wenn die Composite-Kapsel mit dem Gegengewinde in Eingriff gebracht ist.

Der Erfindung liegt der Gedanke zu Grunde, dass die Composite-Kapseln dem Anwender ohne Inhalt zur Verfügung gestellt werden und der Anwender jeweils nur soviel Dentalmasse in die Composite-Kapsel einbringt, wie für die konkrete Anwendung benötigt wird. Mit der Erfindung wird die Composite-Kapsel so gestaltet, dass es für den Anwender leicht möglich ist, die Dentalmasse in die Composite-Kapsel einzubringen. Indem die Stützfläche durch eine Gewindeausnehmung unterbrochen ist, wird es möglich, die Composite-Kapsel mit einem Gegengewinde in Eingriff zu bringen. Über die Gewindeverbindung kann die Composite-Kapsel in Eingriff mit einem Vorratsbehälter, beispielsweise einer Vorratsspritze, gebracht werden, so dass die gewünschte Menge an Dentalmasse aus dem Vorratsbehälter in die Composite-Kapsel übertreten kann. Die erfindungsgemäße Struktur an der Außenseite der Kapselwand ist also so gestaltet, dass sie eine Doppelfunktion erfüllt. Einerseits wird über die Stützfläche eine Gegenkraft aufgebaut, wenn über einen Stößel einer Ausbringpistole eine Kraft auf die Composite-Kapsel ausgeübt wird. Andererseits wird es durch die Gewindeausnehmung möglich, die Composite-Kapsel über eine Gewindeverbindung mit einem Vorratsbehälter zu verbinden, so dass die Composite-Kapsel mit der gewünschten Menge an Dentalmasse gefüllt werden kann.

Eine Kontamination des Vorratsbehälters, beispielsweise durch Kontakt mit dem Mundraum des Patienten, findet durch die Beförderung der Dentalmasse in die Composite-Kapsel nicht statt, so dass in dem Vorratsbehälters verbleibende Dentalmasse bei einer nächsten Behandlung verwendet werden kann. Durch geeignete Wahl der in die Composite-Kapsel beförderten Menge Dentalmasse wird diese während der Behandlung nahezu vollständig aufgebraucht, so dass bei anschließender Entsorgung oder Reinigung der Composite-Kapsel keine oder nur sehr wenig überschüssige Dentalmasse gibt, die entsorgt werden muss.

Erfindungsgemäß bildet die Stützfläche die Vorderfläche eines Bunds, der sich um den Umfang der Composite-Kapsel herum erstreckt. Der Bund hat eine Ausdehnung in Längsrichtung der Composite-Kapsel. Wenn der Bund im hinteren Bereich der Kapsel angeordnet ist, ermöglicht dies eine einfache Handhabung der Composite-Kapsel während der Verbindung mit einem Vorratsbehälter oder einer Ausbringpistole, da ein großer Teil der Composite-Kapsel während des Verbindungsvorgangs umgriffen werden kann.

Die Stützfläche erstreckt sich vorzugsweise über einen Umfangswinkel von mindestens 45°, weiter vorzugsweise mindestens 90°, weiter vorzugsweise mindestens 120°, ohne durch eine Gewindeausnehmung unterbrochen zu sein. Dadurch steht eine große Fläche zur Verfügung, über die Druck auf eine Gegenfläche übertragen werden kann.

Erfindungsgemäß ist die Rückfläche des Bunds ebenfalls mit einer Gewindeausnehmung versehen. Die Gewindeausnehmung in der Rückfläche kann in Umfangsrichtung versetzt relativ zu der Gewindeausnehmung in der Vorderfläche angeordnet sein. Die Gewindeausnehmungen in der Vorderfläche und der Rückfläche sind über eine Gewindefurche miteinander verbunden. Dadurch vergrößert sich der Bereich, in dem ein Abschnitt eines Gegengewindes mit dem Gewinde der Composite-Kapsel in Eingriff gebracht werden kann. Dies ermöglicht einen besseren Halt zwischen der Composite-Kapsel und dem Gegengewinde.

Ein erleichterter Eingriff zwischen der Composite-Kapsel und dem Gegengewinde kann zweckmäßigerweise dadurch erreicht werden, dass die Stützfläche mit einer zweiten Gewindeausnehmung versehen ist, welche mit einem korrespondierenden zweiten Gewindegang eines Gegengewindes in Eingriff gebracht werden kann. Für die zweite Gewindeausnehmung kann ebenfalls eine korrespondierende Gewindeausnehmung in der Rückfläche des Bunds vorgesehen sein. Die beiden Gewindeausnehmungen können mit einer zweiten Gewindefurche verbunden sind. Vorzugsweise ist die zweite Gewindeausnehmung der Stützfläche gegenüber der ersten Gewindeausnehmung der Stützfläche in Umfangsrichtung um einen Winkel von 180° versetzt.

Es kann weiterhin ein Kolben vorgesehen sein, welcher durch die Aufnahmeöffnung der Composite-Kapsel in den Aufnahmeraum eingeführt werden kann. Der äußere Durchmesser des Kolbens kann an den Durchmesser des Aufnahmeraums angepasst sein. Der Kolben dient der Vermittlung des Drucks vom Stößel der Ausbringpistole auf die im zylinderförmigen Teil des Aufnahmeraums befindliche Dentalmasse. Die Verwendung des Kolbens ist vorteilhaft, da der Stößel auf diese Art nicht in direkten Kontakt mit der Dentalmasse kommt und deshalb nicht gereinigt werden muss. Die Dentalmasse wird in den Aufnahmeraum eingebracht, wenn der Kolben nicht im Aufnahmeraum ist.

Die Composite-Kapsel kann als einstückiges Spritzgussteil aus einem Kunststoffmaterial hergestellt sein. Das den Aufnahmeraum umgebende Material kann transparent sein, so dass von außen sichtbar ist, wieviel Dentalmasse im Aufnahmeraum enthalten ist. Um die Dentalmasse vor Lichteinfall zu schützen, kann das transparente Material eingefärbt sein.

Die Kapselwand kann einen Abschnitt aufweisen, in dem das Material der Kapselwand transparent ist. In dem transparenten Abschnitt kann man durch das Material der Kapselwand hindurch in den Aufnahmeraum sehen und beispielweise erkennen, wie viel Dentalmasse in dem Aufnahmeraum enthalten ist. Bezogen auf die Längsachse des Aufnahmeraums kann der transparente Abschnitt den Aufnahmeraum teilweise oder vollständig überdecken. In Umfangsrichtung kann der transparente Abschnitt den Aufnahmeraum ebenfalls teilweise oder vollständig überdecken. Die Composite-Kapsel kann insgesamt aus transparentem Material bestehen.

Das Material der Kapselwand kann in dem transparenten Abschnitt als optischer Filter ausgebildet sein, der kurzwellige Anteile des sichtbaren Lichts sperrt und der für langwellige Anteile des sichtbaren Lichts durchlässig ist. Der Übergangsbereich zwischen dem Sperrbereich und dem Durchlassbereich kann beispielsweise zwischen 500 nm und 600 nm liegen. Für einen Betrachter kann das transparente Material orange erscheinen. Vorzugsweise sperrt der optische Filter außerdem UV-Licht. Der Sperrbereich des optischen Filters kann beispielsweise den Wellenlängenbereich von 370 nm bis 520 nm umfassen. Eine solche Filterwirkung des transparenten Materials ist insbesondere dann von Vorteil, wenn die Dentalmasse in dem Aufnahmeraum unter UV-Licht aushärtet. Solche Dentalmassen werden in flüssigem oder pastösen Zustand ausgebracht und dann durch Bestrahlung mit UV-Licht innerhalb kurzer Zeit ausgehärtet. Solange die Dentalmasse in dem Aufnahmeraum enthalten ist, soll noch keine Aushärtung stattfinden. Durch die Filterwirkung des transparenten Materials wird nicht nur UV-Licht, sondern werden auch die kurzwelligen Anteile des sichtbaren Lichts von der Dentalmasse ferngehalten, wodurch das Risiko einer unbeabsichtigten Aushärtung vermindert wird.

Die Composite-Kapsel kann mit einer Skala versehen sein, auf der die Menge der enthaltenen Dentalmasse abgelesen werden kann. Der Aufnahmeraum kann beispielsweise ein Volumen zwischen 0,1 ml und 0,5 ml haben. Vorzugsweise liegt das Volumen des Aufnahmeraums zwischen 0,12 ml und 0,2 ml.

Der Aufnahmeraum kann einen ersten Abschnitt aufweisen, in dem der Aufnahmeraum zylinderförmig ist. Der Durchmesser des zylinderförmigen Abschnitts ist vorzugsweise an den Durchmesser des Kolbens angepasst. Zwischen der Aufnahmeöffnung und dem zylinderförmigen Abschnitt kann der Aufnahmeraum einen zweiten Abschnitt aufweisen, in dem der Innenraum sich in Richtung der Aufnahmeöffnung aufweitet. Der erste Abschnitt geht vorzugsweise ohne Absatz in den zweiten Abschnitt über. Zum einen erleichtert eine solche Aufweitung das Einführen eines Kolbens. Zum anderen kann der Vorratsbehälter mit einer zu der Aufweitung passenden Spitze versehen sein, so dass die Composite-Kapsel gut auf den Vorratsbehälter aufgesteckt werden kann. Vorzugsweise ist die Spitze des Vorratsbehälters so bemessen, dass die austretende Dentalmasse in den zylinderförmigen Abschnitt des Aufnahmeraums gelangt. Ein Aufnahmeraum, der sich in Richtung der Aufnahmeöffnung erweitert hat gegebenenfalls eigenständigen erfinderischen Gehalt.

Um die Dentalmasse gezielt ausbringen zu können, ist es vorteilhaft, wenn die Composite-Kapsel an ihrem vorderen Ende eine Ausbringspitze aufweist. Die Ausbringspitze kann sich in Richtung der Austrittsöffnung verjüngen. Relativ zur Längsachse des Aufnahmeraums ist die Ausbringspitze vorzugsweise geneigt. Die Neigung kann beispielsweise derart sein, dass die Achse der Ausbringspitze mit der Achse des Aufnahmeraums einen Winkel zwischen 20° und 80° einschließt. Innerhalb der Ausbringspitze befindet sich zweckmäßigerweise ein Kanal, welcher sich vom Aufnahmeraum bis zur Austrittöffnung erstreckt. Der Kanal kann beispielsweise einen Durchmesser zwischen 1 mm und 3 mm, vorzugsweise zwischen 1,2 mm und 2,5 mm haben. Vorzugweise hat der Kanal zwischen dem Aufnahmeraum und der Austrittsöffnung einen konstanten Durchmesser. Um die Dentalmasse noch präziser ausbringen zu können, kann die Ausbringspitze mit einer Kanüle versehen sein, durch die Dentalmasse sich hindurchbewegt.

Die Ausbringspitze kann so ausgerichtet sein, dass es eine Überschneidung gibt zwischen einer Projektion der Ausbringspitze in die Ebene der Stützfläche und einer Projektion der Gewindefurche in die Ebene der Stützfläche. Weiter vorzugsweise schneidet die Projektion der Ausbringspitze die Gewindeausnehmung in der Stützfläche. Eine solche Ausrichtung der Ausbringspitze ist vorteilhaft im Sinne einer günstigen Ausrichtung der Composite-Kapsel innerhalb der Ausbringpistole, da die Stützfläche dann in den Abschnitten der größten Kraftübertragung nicht durch die Gewindeausnehmung unterbrochen ist.

Um die Composite-Kapsel an ihrer Austrittsöffnung zu verschließen und in der Composite-Kapsel befindliche Dentalmasse vor der Umgebungsluft zu schützen, kann eine passende Kappe vorgesehen sein, welche auf die Ausbringspitze der Composite-Kapsel gesteckt werden kann.

Die Vorratsspritze bildet einen Vorratsbehälter für die Dentalmasse, aus dem die gewünschte Menge Dentalmasse in die Composite-Kapsel übertragen werden kann. Die Vorratsspritze weist erfindungsgemäß ein zu der Gewindeausnehmung der Composite-Kapsel passendes Gegengewinde auf, das um eine Austrittsöffnung der Vorratsspritze herum angeordnet ist. Über die Gewindeausnehmung und das Gegengewinde kann die Composite-Kapsel mit der Vorratsspritze verbunden werden. Aus der Austrittsöffnung der Vorratsspritze austretende Dentalmasse tritt dann in den Aufnahmeraums der Composite-Kapsel über. Das Gegengewinde kann als standardisiertes Luer-Lock-Gewinde ausgebildet sein und die Gewindeausnehmung der Composite-Kapsel kann so ausgelegt sein, dass sie mit dem Luer-Lock-Gewinde eine Gewindeverbindung eingeht.

Die Austrittsöffnung der Vorratsspritze ist vorzugsweise an einer sich verjüngenden Spitze der Vorratsspritze angeordnet, wobei die Spitze sich weiter vorzugsweise konusförmig verjüngt. Das Gegengewinde kann an einer die Spitze umgebenden Mantelfläche angeordnet sein, wobei die Vorratsspritze so ausgebildet sein kann, dass der Bund der Composite-Kapsel zwischen der Spitze und der Mantelfläche angeordnet ist, wenn die Gewindeverbindung in Eingriff ist.

Die Konusform der Spitze der Vorratsspritze kann dem standardisierten Luer-Konus entsprechen. Der sich aufweitende Abschnitt des Aufnahmeraums der Composite-Kapsel kann an die Konusform der Spitze angepasst sein, so dass ein flächiger Kontakt besteht, wenn die Composite-Kapsel auf die Spitze aufgesteckt ist. Dabei kann die Spitze länger sein als der sich aufweitende Abschnitt, so dass das vordere Ende der Spitze bis in den zylinderförmigen Abschnitt des Aufnahmeraums hineinragt. In der Vorratsspritze ist vorzugsweise soviel Dentalmasse enthalten, dass es zum Befüllen mehrerer Composite-Kapseln reicht.

Die Ausbringpistole ist erfindungsgemäß mit einer Kapselaufnahme für die Composite-Kapsel ausgestattet, wobei die Kapselaufnahme eine mit der Stützfläche der Composite-Kapsel zusammenwirkende Gegenfläche aufweist. Wenn die Composite-Kapsel in die Kapselaufnahme eingesetzt ist, kann mit einem Stößel Druck auf den Aufnahmeraum der Composite-Kapsel ausgeübt werden, so dass die Dentalmasse am vorderen Ende der Composite-Kapsel austritt. Über die Gegenfläche und die Stützfläche wird die Composite-Kapsel entgegen dem Druck des Stößels in Position gehalten.

Die Gegenfläche ist erfindungsgemäß mit einer Ausnehmung versehen, durch die die Composite-Kapsel in radialer Richtung hindurchgeführt werden kann, um die Composite-Kapsel in die Kapselaufnahme einzusetzen. Dabei kann die Kapselaufnahme so gestaltet sein, dass sie die Composite-Kapsel nach Art eines Snap-Fit umgreift. Wenn die Composite-Kapsel in die Kapselaufnahme eingesetzt ist, ist die Gewindefurche der Stützfläche erfindungsgemäß im Bereich der Ausnehmungen der Gegenfläche angeordnet. Dies hat den Vorteil, dass die Stützfläche über diejenigen Abschnitte mit der Gegenfläche zusammenwirkt, die nicht durch die Gewindefurche geschwächt sind.

Die Erfindung betrifft außerdem ein Verfahren zum Ausbringen einer Dentalmasse unter Verwendung des erfindungsgemäßen Systems. Bei dem Verfahren wird eine Composite-Kapsel an einen Vorratsbehälter angeschlossen, wobei die Composite-Kapsel über eine Gewindeverbindung mit dem Vorratsbehälter verbunden wird. Dentalmasse aus dem Vorratsbehälter wird ausgebracht, so dass diese in einen Aufnahmeraum der Composite-Kapsel übertritt. Der Aufnahmeraum wird mit einem Kolben verschlossen. Die Composite-Kapsel wird in eine Kapselaufnahme einer Ausbringpistole eingesetzt. Die Ausbringpistole wird betätigt, um Druck auf den Kolben auszuüben.

Zunächst wird die leere Composite-Kapsel mit der Vorratsspritze verbunden, indem die Gewindeausnehmung der Composite-Kapsel mit dem passenden Gegengewinde der Vorratsspritze in Eingriff gebracht wird. Durch das Ausüben von Druck auf die in der Vorratsspritze befindliche Dentalmasse wird eine für die Zahnbehandlung geeignete Menge Dentalmasse in die Composite-Kapsel befördert. Anschließend wird die Verbindung zwischen Composite-Kapsel und Vorratsspritze gelöst und ein Kolben durch die Aufnahmeöffnung der Composite-Kapsel in den Aufnahmeraum eingeführt. Danach wird die Composite-Kapsel in die passende Aufnahme der Ausbringpistole eingesetzt und ein Mechanismus zur Bewegung des Stößels in Richtung der Composite-Kapsel betätigt. Der Stößel bewegt sich dann durch die Aufnahmeöffnung der Composite-Kapsel in den Aufnahmeraum hinein und übt Druck auf den Kolben und die dahinter befindliche Dentalmasse aus, welche sich in Richtung der Austrittsöffnung bewegt. Die Betätigung des Mechanismus zur Bewegung des Stößels wird so dosiert, dass eine geeignete Menge Dentalmasse aus der Austrittsöffnung austritt.

Das Verfahren kann mit weiteren Merkmalen fortgebildet werden, die im Zusammenhang der erfindungsgemäßen Composite-Kapsel oder des erfindungsgemäßen Systems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Seitenansicht einer erfindungsgemäßen Composite-Kapsel, die in eine Ausbringpistole eingesetzt ist;
- Fig. 2:: eine vergrößerte Ansicht der Kapselaufnahme der Ausbringpistole aus Fig. 1 ;
- Fig. 3:: eine Seitenansicht einer erfindungsgemäßen Composite-Kapsel, die mit einer Vorratsspritze verbunden ist;
- Fig. 4:: eine Schnittdarstellung einer erfindungsgemäßen Composite-Kapsel;
- Fig. 5:: eine Ansicht von oben auf eine erfindungsgemäße Composite-Kapsel;
- Fig. 6:: die Composite-Kapsel aus Fig. 5 in einer Ansicht von vorne;

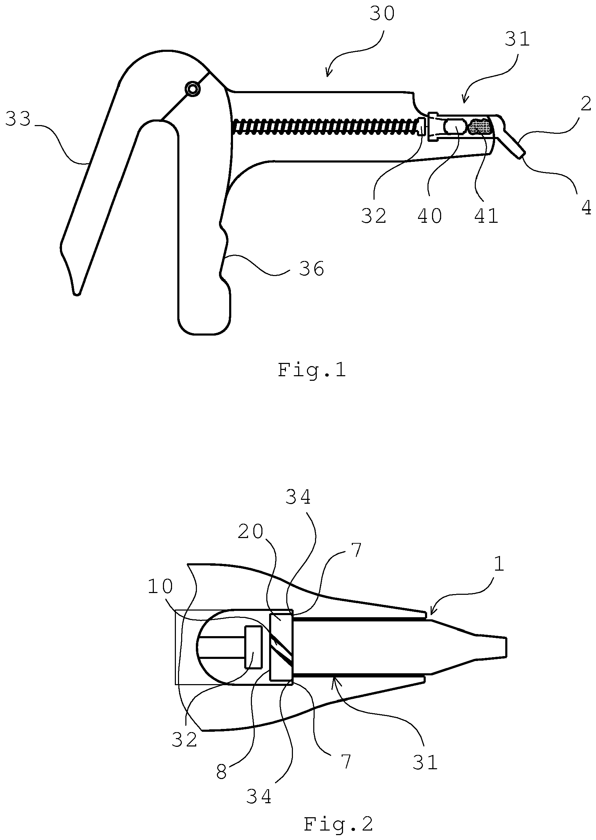

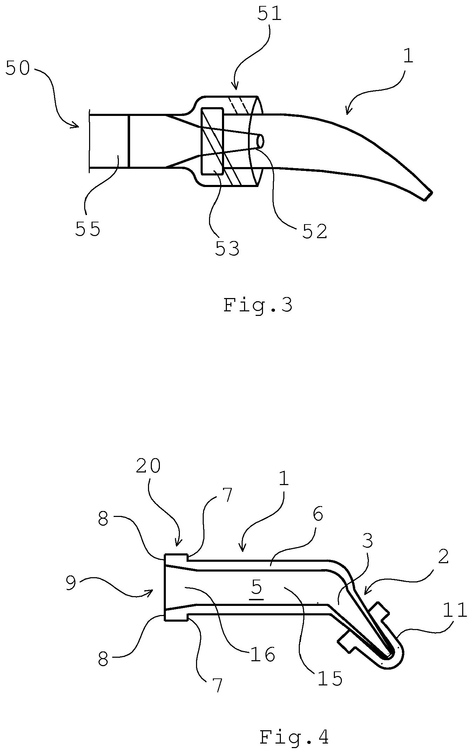

Ein erfindungsgemäßes System umfasst gemäß den Figuren 1 und 3 eine Composite-Kapsel 1, eine Ausbringpistole 30 und eine Vorratsspritze 50. In Figur 2 ist die Composite-Kapsel 1 in mit der Ausbringpistole 30 verbunden. Die Ausbringpistole 30 umfasst einen Mechanismus 33, durch den ein Stößel 32 in Richtung einer am vorderen Ende der Ausbringpistole 30 angeordneten Kapselaufnahme 31 gedrückt wird. Weiterhin umfasst die Ausbringpistole 30 einen Griff 36, der sich in radialer Richtung erstreckt. Die Frontfläche des Stößels 32 ist kreisförmig und hat einen Durchmesser, der etwas kleiner ist als der innere Durchmesser eines Aufnahmeraums 5 der Composite-Kapsel 1. Der Stößel 32 und der Aufnahmeraum 5 der Composite-Kapsel 1 sind so angeordnet, dass bei Betätigung des Mechanismus 33 der Stößel 32 in den Aufnahmeraum 5 eintritt und Druck auf den darin angeordneten Kolben 40 ausübt. Der Kolben 40 wird dadurch in Richtung der Ausbringspitze 2 der Composite-Kapsel 1 bewegt und befördert dadurch die im Aufnahmeraum befindliche Dentalmasse 41 ebenfalls in Richtung der Ausbringspitze 2. Wird der Kolben 40 durch den Stößel 32 genügend weit in Richtung Ausbringspitze 2 gedrückt, tritt die Dentalmasse 41 aus der Austrittsöffnung 4 aus. Für den Zahnarzt ist es leicht, auf diese Weise Dentalmasse gezielt im Mund eines Patienten auszubringen.

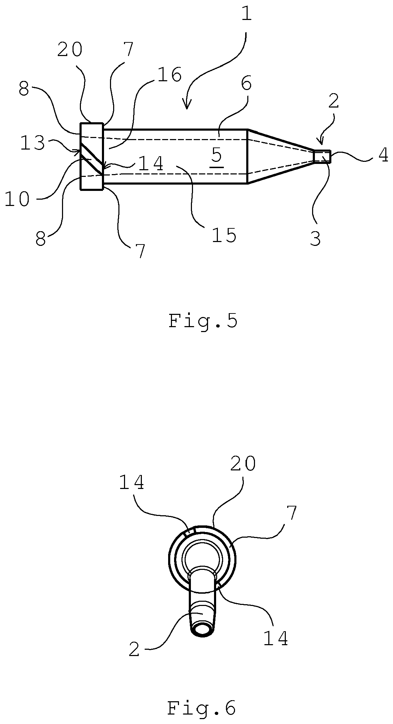

Die Composite-Kapsel 1 umfasst gemäß den Figuren 4 und 5 einen Aufnahmeraum 5, welcher von einer Wand 6 begrenzt ist. Am vorderen Ende des Aufnahmeraums 5 befindet sich die Ausbringspitze 2, welche mit der Längsachse des Aufnahmeraums 5 einen Winkel von ca. 45° einschließt. Am hinteren Ende des Aufnahmeraums 5 ist die Aufnahmeöffnung 9 angeordnet. Der Aufnahmeraum 5 hat einen vorderen Abschnitt 15, in dem die Wandfläche zylinderförmig geformt ist und einen hinteren Abschnitt 16, in dem sich die Wandfläche in Richtung der Aufnahmeöffnung 9 aufweitet. Die Ausbringspitze 2 umfasst einen Kanal 3, welcher sich vom Aufnahmeraum 5 bis zu der am vorderen Ende der Ausbringspitze 2 angeordneten Austrittsöffnung 4 erstreckt. Gemäß Fig. 6 gibt es eine Überschneidung zwischen der Ausbringspitze 2 und einer der Gewindeausnehmungen 14, wenn die Ausbringspitze 2 in die Ebene der Stützfläche projiziert wird.

Am hinteren Ende des Aufnahmeraums 5 springt ein Bund 20 in radialer Richtung nach außen vor. Der Bund ist unterbrochen von zwei Gewindefurchen 10, von denen in Figur 5 nur eine zu sehen ist. Die zweite Gewindefurche ist um 180° zur ersten Gewindefurche in Umfangsrichtung um den Bund herum versetzt. Die Gewindefurchen 10 schließen einen spitzen Winkel mit der Längsachse der Composite-Kapsel ein. Abgesehen von den Gewindefurchen 10 weist der Bund 20 eine zylinderförmige Außenfläche auf, wobei die Zylinderachse entlang der Längsachse des Aufnahmeraums 5 ausgerichtet ist.

Die Composite-Kapsel ist als einstückiges Spritzgussteil aus einem transparenten Kunststoffmaterial hergestellt. Das Kunststoffmaterial wirkt als optischer Filter, der kurzwelliges sichtbares Licht sowie UV-Licht sperrt und der für langwelliges sichtbares Licht durchlässig ist. Der optische Filter ist als Kantenfilter mit einem scharfen Übergang zwischen dem Durchlassbereich und dem Sperrbereich ausgebildet. Der Übergang zwischen dem Durchlassbereich und dem Sperrbereich liegt bei etwa 520 nm. Auf einen Beobachter wirkt die Composite-Kapsel orange. Der Aufnahmeraum 5 hat ein Volumen von 0,19 ml.

Der Bund umfasst weiterhin eine zum vorderen Ende der Composite-Kapsel 1 weisende Stützfläche 7 und eine nach hinten weisende Rückfläche 8. Die Gewindefurche 10 mündet in der Rückfläche 8 in einer Gewindeausnehmung 13 und in der Stützfläche 7 in einer Gewindeausnehmung 14.

Die Composite-Kapsel 1 wird ohne Inhalt beim Benutzer angeliefert und erst vom Benutzer mit einer gewünschten Menge an Dentalmasse aufgefüllt. Ist die Dentalmasse in den Aufnahmeraums 5 eingebracht, wird ein Kolben 40 durch die Aufnahmeöffnung 9 eingeführt, so dass der Aufnahmeraum 5 abgeschlossen ist. Wird mit dem Stößel 32 der Ausbringpistole 30 Druck auf den Kolben 40 ausgeübt, bewegt dieser sich nach vorne und drückt die Dentalmasse in Richtung der Austrittsöffnung 4. Soll die Dentalmasse 41 nicht sofort verwendet werden, kann die Austrittsöffnung 4 mit einer Kappe 11 verschlossen werden.

Zum Einbringen der Dentalmasse wird die Composite-Kapsel 1, wie in Fig. 3 gezeigt, mit einer Vorratsspritze 50 verbunden, die einen Vorrat an Dentalmasse enthält. Die Vorratsspritze 50 hat an ihrem vorderen Ende eine konusförmige Spitze 52. Um die konusförmige Spitze 52 herum erstreckt sich eine Mantelfläche 51, auf deren Innenseite ein zweigängiges Gewinde 53 ausgebildet ist. Die konusförmige Spitze 52 und das Gewinde 53 sind so bemessen, dass es dem Luer-Lock-Standard entspricht. Der Abschnitt 16 des Aufnahmeraums 5 der Composite-Kapsel 1 ist an den Luer-Konus angepasst, liegt also flächig auf der Spitze 52 auf. Das vordere Ende der Spitze 52 ragt bis in den Abschnitt 15 des Aufnahmeraums 5 hinein.

Die Verbindung zwischen der Composite-Kapsel 1 und der Vorratsspritze 50 wird hergestellt, indem die Gewindefurchen 10 der Composite-Kapsel 1 mit dem Gewinde 53 der Vorratsspritze 50 in Eingriff gebracht werden. Die konusförmige Spitze 52 ragt dann in den Aufnahmeraum 5 der Composite-Kapsel 1 hinein. Wird über den Kolben 55 Druck auf die in der Vorratsspritze 50 befindliche Dentalmasse 54 ausgeübt, tritt die Dentalmasse 54 durch die Öffnung der konusförmigen Spitze 52 aus. Die Composite-Kapsel 1 wird so mit einer gewünschten Menge der Dentalmasse 54 befüllt. Nach der Befüllung der Composite-Kapsel 1 wird diese von der Vorratsspritze 50 getrennt und der Kolben 40 wird durch die Aufnahmeöffnung 9 der Composite-Kapsel 1 eingeführt.

Um die Dentalmasse im Mund eines Patienten auszubringen, wird die Composite-Kapsel 1 anschließend in die Kapselaufnahme 31 der Ausbringpistole 30 eingesteckt. In Fig. 2 ist die Kapselaufnahme 31 in einer Ansicht von oben gezeigt. In dieser Ansicht ist die Ausbringspitze 4 der Composite-Kapsel 1, die in Fig. 1 nach unten weist, in die Zeichenebene hinein gerichtet. Die Kapselaufnahme 31 umfasst einen Einführschacht für die Composite-Kapsel 1, in den die Composite-Kapsel 1 von oben eingesetzt werden kann. Die seitlichen Flächen der Kapselaufnahme legen die Ausrichtung der Composite-Kapsel 1 fest und sind so ausgelegt, dass die Composite-Kapsel 1 mittels Snap-Fit einrastet. Die Längserstreckung der seitlichen Flächen ist kleiner als der Abstand zwischen der Stützfläche 7 und dem vorderen Ende der Composite-Kapsel 1. Die Kapselaufnahme 31 umfasst weiterhin eine Stirnfläche 34, an der die Stützfläche 7 der in die Kapselaufnahme 31 eingesetzten Composite-Kapsel 1 anliegt. Die Stirnfläche 34 bildet also eine Gegenfläche zu der Stützfläche 7. Dadurch ist gewährleistet, dass die Composite-Kapsel 1 durch den Stößel 32 nicht nach vorne gedrückt wird.

Wenn die Composite-Kapsel 1 richtig in die Kapselaufnahme 31 eingesetzt ist, zeigt die Ausbringspitze 2 der Composite-Kapsel 1 in dieselbe Richtung wie der Griff 36 der Ausbringpistole 30. Eine der Gewindefurchen 10 liegt dann gemäß Fig. 2 in dem Bereich der Kapselaufnahme 31, in dem die Stützfläche 7 nicht an der Gegenfläche 34 anliegt. Dort wo die Kräfte zwischen der Stützfläche 7 und der Gegenfläche 34 übertragen werden, ist der Bund 20 nicht durch eine Gewindefurche geschwächt.

Der Bund 20 der erfindungsgemäßen Composite-Kapsel 1 hat also eine Doppelfunktion, indem er sich einerseits an der Gegenfläche 34 der Ausbringpistole 30 abstützt und andererseits die Gewindeverbindung mit dem Gewinde 53 ermöglicht. Außerdem ist der Aufnahmeraums 5 der Composite-Kapsel 1 so gestaltet, dass er flächig auf der Konus-Spitze 52 der Vorratsspritze 50 aufliegt.

## Patentansprüche

1. System aus einer Vorratsspritze (50), einer Ausbringpistole (33) und einer Composite-Kapsel (1) zum Aufnehmen und Abgeben einer Dentalmasse (41), wobei die Composite-Kapsel (1) einen von einer Kapselwand (6) umgebenen Aufnahmeraum (5) aufweist, der sich zwischen einer Austrittsöffnung (4) und einer Aufnahmeöffnung (9) erstreckt, wobei die Austrittsöffnung an einem vorderen Ende des Aufnahmeraums (5) und die Aufnahmeöffnung (9) an einem hinteren Ende des Aufnahmeraums (5) angeordnet ist, und mit einer gegenüber der Kapselwand (6) nach außen vorspringenden Stützfläche (7), die in Richtung des vorderen Endes ausgerichtet ist und die Vorderfläche eines Bunds (20) bildet, der sich um den Umfang der Composite-Kapsel (1) herum erstreckt und eine Ausdehnung in Längsrichtung der Composite-Kapsel (1) hat,
**dadurch gekennzeichnet,**
**dass** die Stützfläche (7) durch eine Gewindeausnehmung (14) unterbrochen ist, dass die Rückfläche (8) des Bunds (20) ebenfalls mit einer Gewindeausnehmung (13) versehen ist, und dass die Gewindeausnehmungen (14, 13) in der Vorderfläche und der Rückfläche (8) über eine Gewindefurche (10) miteinander verbunden sind,
**dass** die Vorratsspritze (50) ein zu der Gewindeausnehmung (14) der Composite-Kapsel (1) passendes Gegengewinde (53) aufweist, wobei das Gegengewinde (53) um einen Austrittskanal der Vorratsspritze (50) herum angeordnet ist, und
**dass** die Ausbringpistole (33) eine Kapselaufnahme (31) für die Composite-Kapsel (1) umfasst, die eine mit der Stützfläche (7) der Composite-Kapsel (1) zusammenwirkende Gegenfläche (34) aufweist, wobei die Gegenfläche (34) eine Ausnehmung aufweist, durch die die Composite-Kapsel (1) in radialer Richtung eingesetzt werden kann, wobei die Composite-Kapsel (1) im eingesetzten Zustand in der Kapselaufnahme (31) so ausgerichtet ist, dass die Gewindefurche (10) der Composite-Kapsel (1) im Bereich der Ausnehmung der Gegenfläche (34) angeordnet ist.

2. System nach Anspruch 1, **dadurch gekennzeichnet, dass** die Gewindeausnehmung (13) der Rückfläche in Umfangsrichtung versetzt relativ zu der Gewindeausnehmung (14) der Stützfläche (7) angeordnet ist.

3. System nach einem der Ansprüche 1 bis 2, **dadurch gekennzeichnet, dass** die Stützfläche (7) der Composite-Kapsel (1) zwei Gewindeausnehmungen (14) aufweist und dass die Gewindeausnehmungen (14) um 180° versetzt angeordnet sind.

4. System nach einem der Ansprüche 1 bis 3, **gekennzeichnet durch** einen Kolben (40), der ausgelegt ist, **durch** die Aufnahmeöffnung (9) in den Aufnahmeraum (15) der Composite-Kapsel (1) eingeführt zu werden.

5. System nach einem der Ansprüche 1 bis 4, **dadurch gekennzeichnet, dass** der Aufnahmeraum (5) der Composite-Kapsel (1) in einem vorderen Abschnitt (15) zylinderförmig ist und sich in einem hinteren Abschnitt (16) in Richtung der Aufnahmeöffnung (9) aufweitet.

6. System nach einem der Ansprüche 1 bis 5, **dadurch gekennzeichnet, dass** eine Ausbringspitze (2) der Composite-Kapsel (1) bezüglich der Längsachse der Composite-Kapsel (1) geneigt ist.

7. System nach Anspruch 6, **dadurch gekennzeichnet, dass** es eine Überschneidung gibt zwischen einer Projektion der Ausbringspitze (2) in die Ebene der Stützfläche (7) und einer Projektion der Gewindefurche (10) in die Ebene der Stützfläche (7).

8. System nach Anspruch 6 oder 7, **dadurch gekennzeichnet, dass** eine zu der Ausbringspitze (2) passende Kappe vorgesehen ist.

9. System nach einem der Ansprüche 5 bis 8, **dadurch gekennzeichnet, dass** die Vorratsspritze (50) eine sich verjüngende Spitze (52) aufweist und dass die sich verjüngende Spitze (52) an den sich aufweitenden Abschnitt (16) des Aufnahmeraums (5) angepasst ist.

10. Verfahren zum Ausbringen einer Dentalmasse (41) unter Verwendung eines Systems nach einem der vorstehenden Ansprüche 1 bis 9 mit folgenden Schritten:
a. Anschließen der Composite-Kapsel (1) an die einen Vorratsbehälter (50) bildende Vorratsspritze, wobei die Composite-Kapsel (1) über eine die Gewindefurche (10) und das Gegengewinde (53) umfassende Gewindeverbindung (10, 53) mit dem Vorratsbehälter (50) verbunden wird;
b. Ausbringen von Dentalmasse (41) aus dem Vorratsbehälter (50), so dass diese in den Aufnahmeraum (5) der Composite-Kapsel (1) übertritt;
c. Verschließen des Aufnahmeraums (5) mit einem Kolben (40);
d. Einsetzen der Composite-Kapsel (1) in die Kapselaufnahme (31) der Ausbringpistole (30), wobei das Einsetzen in radialer Richtung durch die in der Gegenfläche (34) angeordnete Ausnehmung erfolgt, so dass die Gewindefurche (10) der Composite-Kapsel (1) im Bereich der Ausnehmung der Gegenfläche (34) angeordnet ist;
e. Betätigen der Ausbringpistole (30), um Druck auf den Kolben (40) auszuüben, so dass Dentalmasse (41) aus der Composite-Kapsel (1) austritt.

## Claims

1. A system comprising a storage syringe (50), a dispensing gun (33) and a composite capsule (1) for receiving and dispensing a dental compound (41), wherein the composite capsule (1) has a reception space (5) which is surrounded by a capsule wall (6) and which extends between an outlet opening (4) and a reception opening (9), with the outlet opening being arranged at a front end of the reception space (5) and the reception opening (9) being arranged at a rear end of the reception space (5), said composite capsule (1) comprising a support surface (7) which projects outwardly with respect to the capsule wall (6), which is oriented in the direction of the front end and which forms the front surface of a collar (20) extending around the periphery of the composite capsule (1) and having an extent in the longitudinal direction of the composite capsule (1),
**characterized in that**
the support surface (7) is interrupted by a threaded recess (14); **in that** the rear surface (8) of the collar (20) is likewise provided with a threaded recess (13); and **in that** the threaded recesses (14, 13) in the front surface and in the rear surface (8) are connected to one another via a thread groove (10); **in that** the storage syringe (50) comprises a mating thread (53) which matches the threaded recess (14) of the composite capsule (1), with the mating thread (53) being arranged around an outlet passage of the storage syringe (50); and
**in that** the dispensing gun (33) comprises a capsule receiver (31) for the composite capsule (1) which has a mating surface (34) cooperating with the support surface (7) of the composite capsule (1), with the mating surface (34) having a recess through which the composite capsule (1) can be inserted in the radial direction, and with the composite capsule (1) being oriented in the capsule receiver (31) in the inserted state such that the thread groove (10) of the composite capsule (1) is arranged in the region of the recess of the mating surface (34).

2. A system in accordance with claim 1,
**characterized in that**
the threaded recess (13) of the rear surface is offset in the peripheral direction relative to the threaded recess (14) of the support surface (7).

3. A system in accordance with one of the claims 1 to 2,
**characterized in that**
the support surface (7) of the composite capsule (1) has two threaded recesses (14); and **in that** the threaded recesses (14) are arranged offset by 180°.

4. A system in accordance with any one of the claims 1 to 3,
**characterized by**
a plunger (40) which is configured to be introduced through the reception opening (9) into the reception space (15) of the composite capsule (1).

5. A system in accordance with any one of the claims 1 to 4,
**characterized in that**
the reception space (5) of the composite capsule (1) is cylindrical in a front section (15) and widens in a rear section (16) in the direction of the reception opening (9).

6. A system in accordance with any one of the claims 1 to 5,
**characterized in that**
a dispensing tip (2) of the composite capsule (1) is inclined with respect to the longitudinal axis of the composite capsule (1).

7. A system in accordance with claim 6,
**characterized in that**
there is an overlap between a projection of the dispensing tip (2) into the plane of the support surface (7) and a projection of the thread groove (10) into the plane of the support surface (7).

8. A system in accordance with claim 6 or claim 7,
**characterized in that**
a cap matching the dispensing tip (2) is provided.

9. A system in accordance with any one of the claims 5 to 8,
**characterized in that**
the storage syringe (50) has a tapering tip (52); and **in that** the tapering tip (52) is adapted to the widening section (16) of the reception space (5).

10. A method for dispensing a dental compound (41) using a system in accordance with any one of the preceding claims 1 to 9 comprising the following steps:
a. connecting the composite capsule (1) to the storage syringe forming a storage container (50), wherein the composite capsule (1) is connected to the storage container (50) via a threaded connection (10, 53) comprising the thread groove (10) and the mating thread (53);
b. dispensing the dental compound (41) from the storage container (50) such that it passes into the reception space (5) of the composite capsule (1);
c. closing the reception space (5) using a plunger (40);
d. inserting the composite capsule (1) into the capsule receiver (31) of the dispensing gun (30), wherein the insertion takes place in the radial direction through the recess arranged in the mating surface (34) such that the thread groove (10) of the composite capsule (1) is arranged in the region of the recess of the mating surface (34); and
e. actuating the dispensing gun (30) in order to exert pressure on the plunger (40) such that the dental compound (41) exits the composite capsule (1).

## Revendications

1. Système constitué d'une seringue d'alimentation (50), d'un pistolet de distribution (33) et d'une capsule à composite (1) pour recevoir et distribuer une pâte dentaire (41), la capsule à composite (1) présentant un espace de réception (5) entouré par une paroi de capsule (6) et s'étendant entre une ouverture de sortie (4) et une ouverture de réception (9), l'ouverture de sortie étant disposée à une extrémité avant de l'espace de réception (5) et l'ouverture de réception (9) étant disposée à une extrémité arrière de l'espace de réception (5), et comportant une surface d'appui (7) qui est fait saillie vers l'extérieur par rapport à la paroi de capsule (6) et qui est orientée en direction de l'extrémité avant et qui forme la surface avant d'une collerette (20) qui s'étend autour du pourtour de la capsule à composite (1) et qui présente une extension en direction longitudinale de la capsule à composite (1),
**caractérisé en ce que**
la surface d'appui (7) est interrompue par un évidement taraudé (14), **en ce que**
la surface arrière (8) de la collerette (20) est également pourvue d'un évidement taraudé (13), et **en ce que**
les évidements taraudés (14, 13) dans la surface avant et dans la surface arrière (8) sont reliés l'un à l'autre par une rainure taraudée (10), **en ce que** la seringue d'alimentation (50) présente un filetage (53) complémentaire à l'évidement taraudé (14) de la capsule à composite (1), le filetage complémentaire (53) étant agencé autour d'un canal de sortie de la seringue d'alimentation (50), et **en ce que**
le pistolet de distribution (33) comprend un logement de capsule (31) pour la capsule à composite (1), qui présente une surface complémentaire (34) coopérant avec la surface d'appui (7) de la capsule à composite (1), la surface complémentaire (34) présentant un évidement permettant d'insérer la capsule à composite (1) en direction radiale, et dans l'état inséré dans le logement de capsule (31) la capsule à composite (1) est orientée de telle sorte que la rainure taraudée (10) de la capsule à composite (1) est agencée au niveau de l'évidement de la surface complémentaire (34).

2. Système selon la revendication 1,
**caractérisé en ce que**
l'évidement taraudé (13) de la surface arrière est agencé de façon décalée en direction périphérique par rapport à l'évidement taraudé (14) de la surface d'appui (7).

3. Système selon l'une des revendications 1 à 2,
**caractérisé en ce que**
la surface d'appui (7) de la capsule à composite (1) présente deux évidements taraudés (14), et **en ce que**
les évidements taraudés (14) sont agencés en décalage de 180°.

4. Système selon l'une des revendications 1 à 3,
**caractérisé par**
un piston (40) conçu pour être introduit dans l'espace de réception (15) de la capsule à composite (1) à travers l'ouverture de réception (9).

5. Système selon l'une des revendications 1 à 4,
**caractérisé en ce que**
l'espace de réception (5) de la capsule à composite (1) est de forme cylindrique dans une portion avant (15) et va en s'évasant en direction de l'ouverture de réception (9) dans une portion arrière (16).

6. Système selon l'une des revendications 1 à 5,
**caractérisé en ce que**
une pointe de distribution (2) de la capsule à composite (1) est inclinée par rapport à l'axe longitudinal de la capsule à composite (1).

7. Système selon la revendication 6,
**caractérisé en ce que**
il existe un chevauchement entre une projection de la pointe de distribution (2) dans le plan de la surface d'appui (7) et une projection de la rainure taraudée (10) dans le plan de la surface d'appui (7).

8. Système selon la revendication 6 ou 7,
**caractérisé en ce que**
il est prévu un capuchon adapté à la pointe de distribution (2).

9. Système selon l'une des revendications 5 à 8,
**caractérisé en ce que**
la seringue d'alimentation (50) présente une pointe (52) qui va en se rétrécissant, et **en ce que**
la pointe (52) en rétrécissement est adaptée à la portion (16) de l'espace de réception (5), qui va en s'évasant.

10. Procédé de distribution d'une pâte dentaire (41) par utilisation d'un système selon l'une des revendications précédentes 1 à 9, comprenant les étapes suivantes consistant à :
a. raccorder la capsule à composite (1) à la seringue d'alimentation formant un réservoir (50), la capsule à composite (1) étant reliée au réservoir (50) via une liaison à pas de vis (10, 53) comprenant la rainure taraudée (10) et le filetage complémentaire (53) ;
b. distribuer la pâte dentaire (41) hors du réservoir (50) de manière à la transférer jusque dans l'espace de réception (5) de la capsule à composite (1) ;
c. refermer l'espace de réception (5) par un piston (40) ;
d. insérer la capsule à composite (1) dans le logement de capsule (31) du pistolet de distribution (30), l'insertion s'effectuant en direction radiale à travers l'évidement disposé dans la surface complémentaire (34), de telle sorte que la rainure taraudée (10) de la capsule à composite (1) est agencée au niveau de l'évidement de la surface complémentaire (34) ;
e. actionner le pistolet de distribution (30) pour exercer une pression sur le piston (40), de telle sorte que de la pâte dentaire (41) sort hors de la capsule à composite (1).
